# EUROPEAN PATENT APPLICATION

(11) **EP 4 461 934 A1**
(43) Date of publication of application: **13.11.2024**
(21) Application number: 23172791.8
(22) Date of filing: 11.05.2023
(51) Int. Cl.: F01P 7/14, F01P 3/20, F01P 11/04, B60K 11/02, H01M 10/60

(54) **A HEAT TRANSFER FLUID DISTRIBUTOR**

(71) Applicant: VALEO SYSTEMES THERMIQUES, 78320 Le Mesnil Saint-Denis (FR)
(72) Inventor: LIPOWSKI, Mateusz, 32 050 Skawina (PL); POTOK, Dariusz, 32 050 Skawina (PL); MACHUL, Krzysztof, 32 050 Skawina (PL); NOWAKOWSKI, Adrian, 32 050 Skawina (PL)
(74) Representative: Valeo Systèmes Thermiques

(57) **Abstract**

The object of the invention is, among others, a heat transfer fluid distributor (10) for a cooling circuit of a motor vehicle, the distributor (10) comprising: at least one inlet (13) for said heat transfer fluid; and at least one outlet (14) for said heat transfer fluid; a first part, called the support part (11), comprising at least one channel, called the main channel (19); a second part, called the complementary part (12), comprising at least one channel, called the complementary channel (41); the support part (11) and the complementary part (12) both extending in parallel in the first plane (P1), wherein at least one main channel (19) and the at least one complementary channel (41) together form at least one hollow tubular conduit (42) fluidly connected to one of the at least one inlet (13) and/or to one of the at least one outlet (14), wherein at least one main channel (19) and the at least one complementary channel (41) together forming at least one hollow tubular conduit (42) are joined by a primary seam (50), so that a fluid-tight connection between the main channel (19) and the at least one complementary channel (41) is provided, wherein the fluid distributor (10) further comprises a secondary seam (60) extending along the primary seam (50) wherein the secondary seam (60) is located with respect to the primary seam (50) on the opposite side of corresponding tubular conduit (42).

## Description

### FIELD OF THE INVENTION

The invention relates to a heat transfer fluid distributor. In particular, the invention relates to heat transfer fluid distributor for a motor vehicle.

### BACKGROUND OF THE INVENTION

A motor vehicle is equipped with one or more cooling circuits to limit the risk of overheating of the various components of the vehicle. For example, the motor vehicle may be equipped with a cooling circuit for a vehicle battery and a cooling circuit for a vehicle engine.

Each cooling system comprises a plurality of pipes through which a heat transfer fluid, also known as coolant, flows. The coolant absorbs heat from a vehicle component, such as the battery or engine, thereby preventing that component from reaching temperatures high enough to cause a breakdown.

In order to distribute the heat transfer fluid between various vehicle components or to mix heat transfer fluid flows from the various vehicle components, each cooling circuit may comprise at least one heat transfer fluid distributor. Such a distributor comprises at least one heat transfer fluid inlet, at least one heat transfer fluid outlet, and at least one conduit connecting each inlet to at least one of the outlets. Each inlet, each outlet and each conduit of the distributor is generally tube-shaped.

In a known manner, the dispenser is made from the assembly of a first part and a second part, each of which comprises a portion, in particular a half, of the side wall of each of the tubes formed by each inlet, each outlet and each duct of the dispenser.

### SUMMARY OF THE INVENTION

The object of the invention is, among others, a heat transfer fluid distributor for a cooling circuit of a motor vehicle, the distributor comprising: at least one inlet for said heat transfer fluid; and at least one outlet for said heat transfer fluid; a first part, called the support part, comprising at least one channel, called the main channel; a second part, called the complementary part, comprising at least one channel, called the complementary channel; the support part and the complementary part both extending in parallel in the first plane, wherein at least one main channel and the at least one complementary channel together form at least one hollow tubular conduit fluidly connected to one of the at least one inlet and/or to one of the at least one outlet, wherein at least one main channel and the at least one complementary channel together forming at least one hollow tubular conduit are joined by a primary seam, so that a fluid-tight connection between the main channel and the at least one complementary channel is provided, wherein the fluid distributor further comprises a secondary seam extending along the primary seam, wherein the secondary seam is located with respect to the primary seam on the opposite side of corresponding tubular conduit.

Advantageously, the support part and the complementary part together form a first zone located between the primary seam and the secondary seam, wherein the first zone is configured to provide a reservoir for the heat transfer fluid in case of leakage of the primary seam.

Advantageously, the primary seam is of the same thickness as the secondary seam, wherein the thickness is measured in a direction parallel to the first plane.

Advantageously, the secondary seam is of greater thickness that the primary seam, wherein the thickness is measured in a direction parallel to the first plane.

Advantageously, primary seam is of greater thickness than the secondary seam, wherein the thickness is measured in a direction parallel to the first plane.

Advantageously, at least one main channel and the at least one complementary channel together forming at least one hollow tubular conduit are joined together by plastic welding.

Advantageously, at least one main channel and the at least one complementary channel together forming at least one hollow tubular conduit are joined together by molding.

Advantageously, at least one main channel and the at least one complementary channel together forming at least one hollow tubular conduit are joined together by adhesive material.

Advantageously, the distributor comprises at least one tertiary seam extending along the outline of at least primary seam, wherein the tertiary seam is located proximally to the terminal ends of the support part and the complementary part, both extending in parallel in the first plane.

Advantageously, the distributor further comprises a second zone, wherein the primary seam and the secondary seam of said second zone are spaced apart closer than he primary seam and secondary seam of the first zone.

Advantageously, one of at least one inlet and/or one of the at least one outlet protrudes directly from the support part.

Advantageously, one of at least one inlet and/or one of the at least one outlet protrudes directly from the complementary part.

Advantageously, one of at least one inlet and/or one of the at least one outlet is formed by support part and complementary par.

Another object of the invention is a motor vehicle comprising at least one heat transfer fluid distributor according to any of the preceding claims.

The above mention inventions allow providing an external leak protector. The fluid is captured within the structure of the fluid distributor. This allows to mitigate the risk of potential environmental pollution by heat transfer fluid. It also allows to increase the safety of the user be reducing the risk of electrical short circuit which could make harm to passengers. The invention also aims to solve the problem of the debris getting into the distributor. The debris getting in-between the plate structure of distributor make material deteriorate and therefore it can significantly reduce the service life of such distributor. Providing the additional sealing at the vicinity of the terminal edge of the distributor helps to solve the problem. For the manufacturers, the invention allows to increase the potential product lifetime despite the limited operation in case of leakage of the fluid, whereas in case of debris it additionally lowers the of the warranty returns of the product due to premature deterioration.

### BRIEF DESCRITPTION OF DRAWINGS

Examples of the invention will be apparent from and described in detail with reference to the accompanying drawings, in which:
Fig. 1 shows a perspective view of the heat transfer fluid distributor.

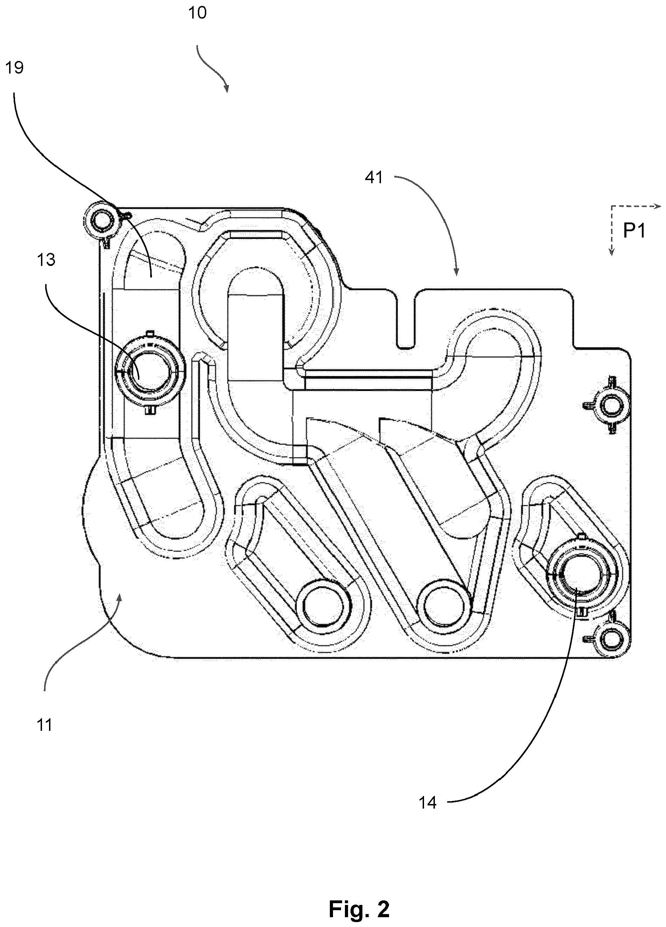

Fig. 2 shows a top view of heat transfer fluid distributor of Fig. 1.
Fig. 3 shows a side view of heat transfer fluid distributor.
Fig. 4 shows a cross-sectional view of the heat transfer fluid distributor comprising a primary seam and secondary seam.

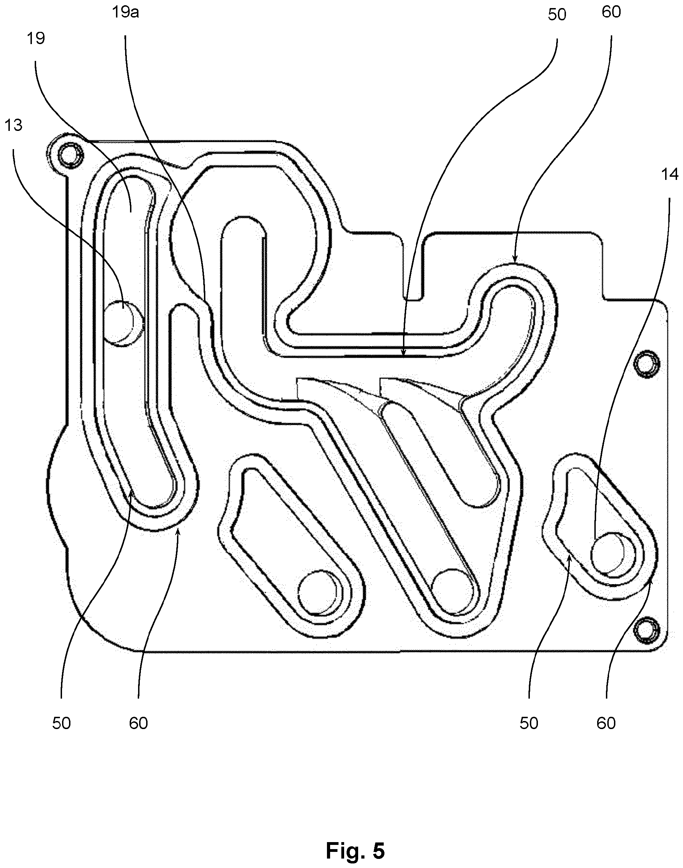

Fig. 5 shows a different cross-sectional view of the heat transfer fluid distributor shown in Fig. 4, comprising the primary seam and the secondary seam.

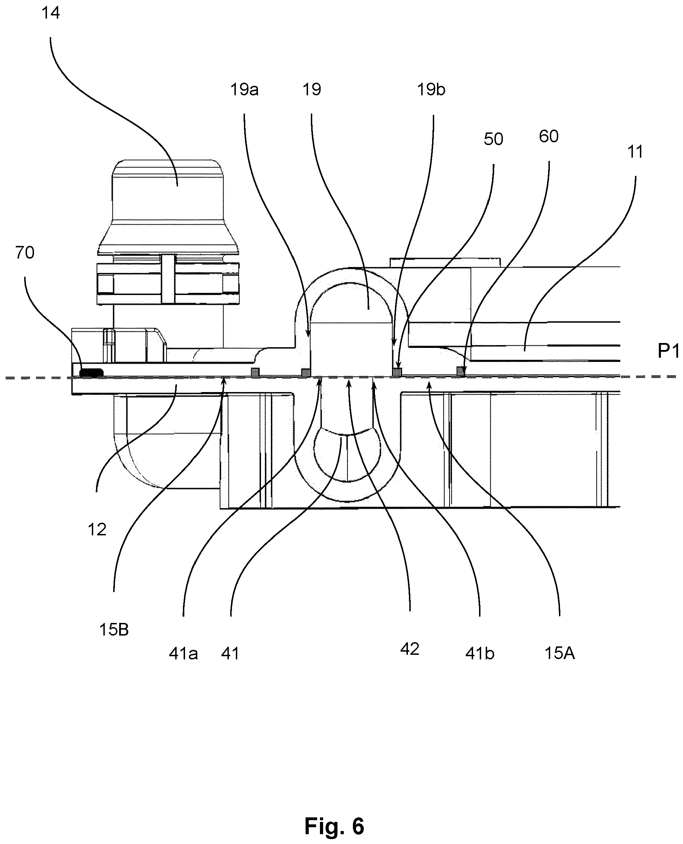

Fig. 6 shows a cross-sectional view of the heat transfer fluid distributor comprising the primary seam, the secondary seam and a tertiary seam.

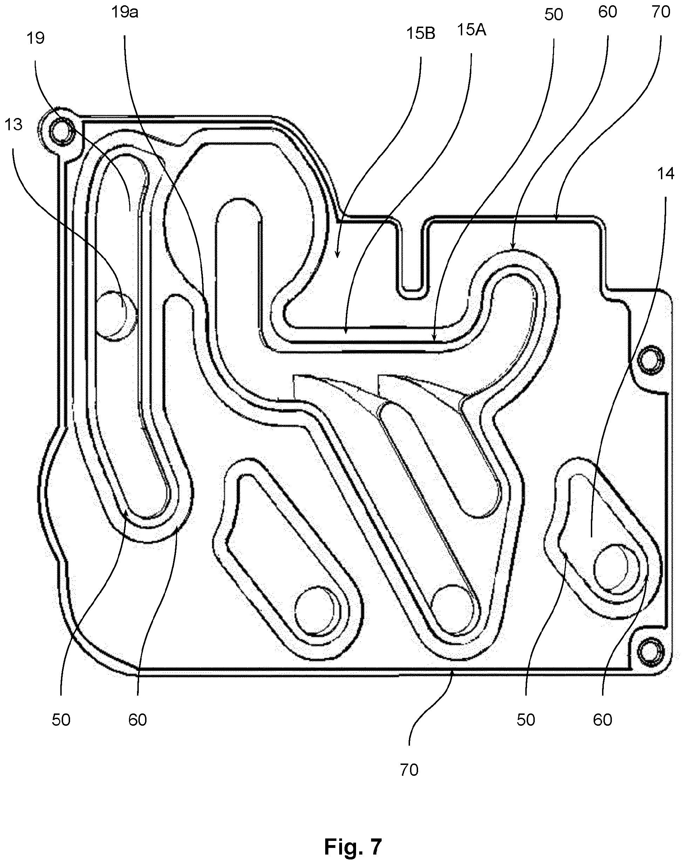

Fig. 7 shows a different cross-sectional view of the heat transfer fluid distributor shown in Fig. 6, comprising the primary seam, the secondary seam and the tertiary seam.

### DETAILED DESCRIPTION OF EMBODIMENTS

The object of the invention is, among others, a heat transfer fluid distributor 10 for a cooling circuit of a motor vehicle. The heat transfer fluid distributor 10 may be further referred to as distributor 10. The distributor 10 may be suitable for any type of the heat transfer fluid for example coolant. The words heat transfer fluid, fluid, or coolant may be used interchangeably throughout the specification. The distributor 10 may be a part of cooling circuit of a motor vehicle. The motor vehicle may be referred to as electric vehicle, hybrid vehicles, and vehicles equipped with internal combustion engine.

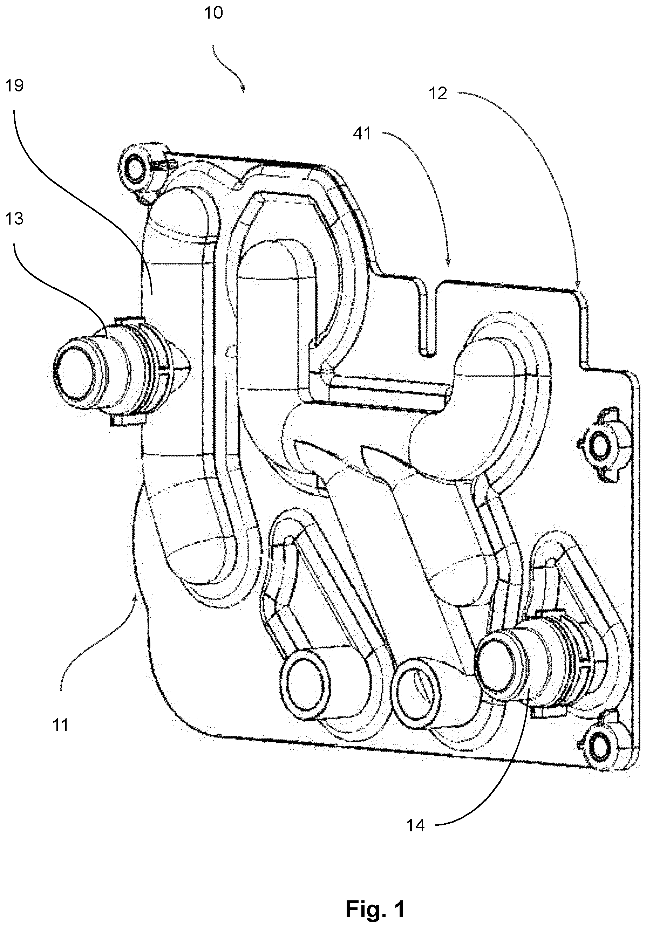

As shown in Fig. 1, the distributor 10 may comprise, inter alia, at least one inlet 13 and at least one outlet 14 for said heat transfer fluid. The inlet 13 is configured to enable ingress of the fluid to the distributor, whereas the outlet 14 may be configured to enable egress of the fluid from the distributor. The number and location of the inlets 13 and the outlets 14 is non-limiting.

The distributor 10 may have an essentially rectangular, square, oval or circular shape, according to design requirements. The distributor 10 presented in Fig.1 is essentially of flat substantially rectangular shape. As the distributor is essentially flat it may comprise a first plane P1 along which said distributor extends. The distributor 10 may further comprise a first part, called the support part 11 and a second part, called the complementary part 12. The support part 11 and the complementary part 12 may also be essentially flat. The flat parts 11,12 may be joined together as shown, for example, in Fig.1. One can observe, that if both plates 11, 12 are flat, the first plane P1 may be determined by the flat portion of the support part 11 which is in contact with the flat portion of the complementary part 12.

The support part 11 may comprise at least one channel, called the main channel 19. The main channel 19 may comprise any shape which will allow to convey the fluid there-through, for example, semi-circular, rectangular, and other. In other words, the main channel 19 is part of the support part 11 only, i.e. it forms the bed for the fluid. The main channel 19 may comprise a first main edge 19a and a second main edge 19b which constitute the capacity of the main channel 19 at selected cross-section.

Similarly, a second part, called the complementary part 12 may comprise at least one channel, called the complementary channel 41. The complementary channel 41 may comprise any shape which will allow to convey the fluid there-through, for example, semi-circular, rectangular, and other. In other words, the complementary channel 41 is part of the complementary part 12 only, i.e. it forms the bed for the fluid.

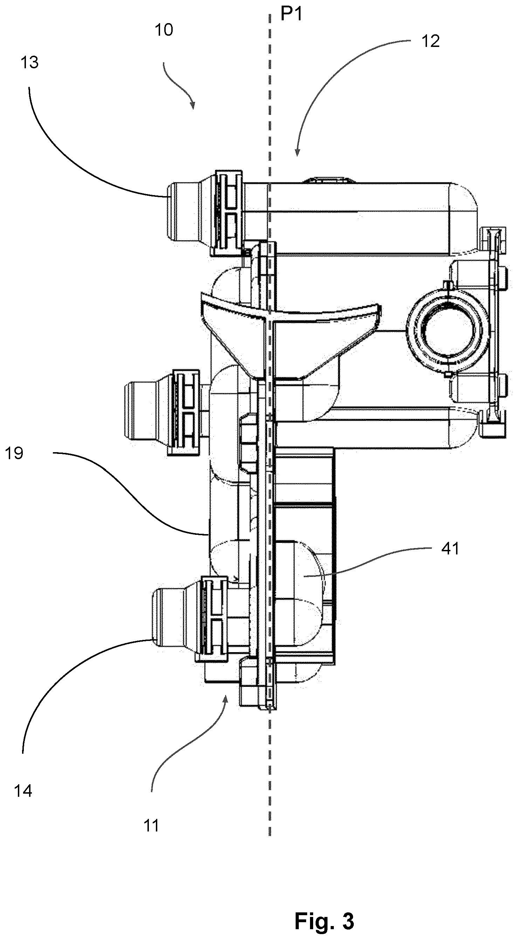

As shown, for example, in Fig. 3, the complementary channel 41 may comprise a first complementary edge 41a and a second complementary edge 41b which constitute the capacity of the complementary channel 41 at selected cross-section.

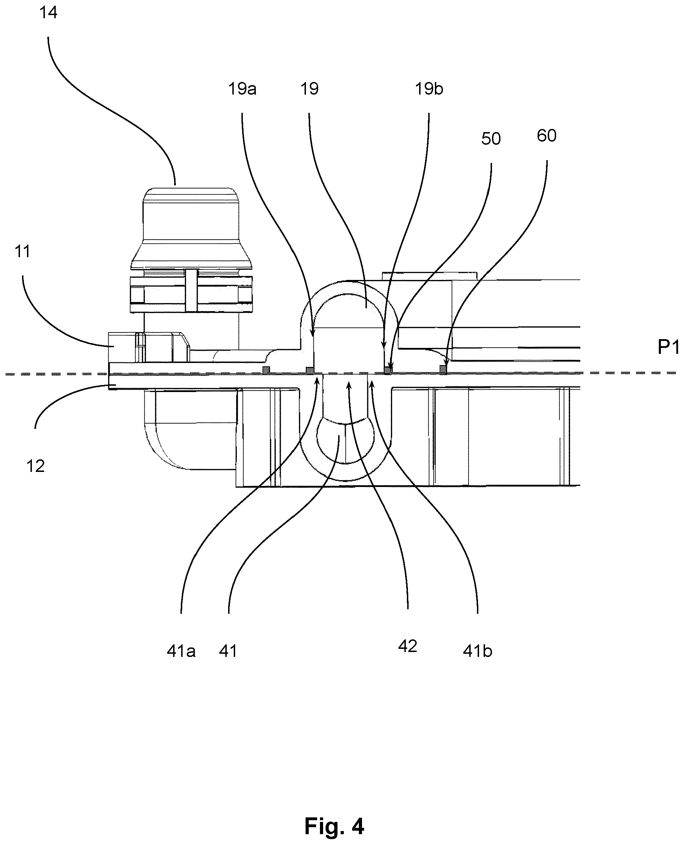

When assembled, both the support part 11 and the complementary part 12 may extend in a direction parallel to the first plane P1, as shown in Figs 3 and 4.. However, other shapes of the parts 11,12 are also envisaged. For example, some sections of the parts 11, 12 may be slanted with respect to the first plane P1, so that one portion of the parts 11, 12 may be parallel to said first plane P1, and the other may be at an angle with respect to said first plane P1.

As shown in Fig.4, at least one main channel 19 and the at least one complementary channel 41 together may form at least one hollow tubular conduit 42, which may further be referred to as the conduit 42. The conduit may be 42 fluidly connected to one of the at least one inlet 13 and/or to one of the at least one outlet 14. The tubular shape is only one of the examples of the shape of the conduit 42, as its shape depends mainly on the shapes of the channels 19, 41. Naturally, the conduit 42 provides a closed channel for the fluid, so that the distributor 10 may be arranged in different orientations, so that the fluid is not spilled out.

The two parts 11, 12 assembled together may be prone to leakage, as no sealing is provided. Thus, the conduit 42 may be sealed by a primary seam 50, so that a fluid-tight connection between the main channel 19 and the at least one complementary channel 41 is provided. In particular, the first main edge 19a may be connected with the first complementary edge 41a and the second main edge 19b may be connected with the second complementary edge 41b. The respective edges 19a, 19b, 41a, 41b may be connected along the entire conduit 42. This provides a fluid tight connection between the parts 11, 12. Thus, in one of the embodiments the primary seam 50 may be regarded as integral portions of the respective edges 19a, 19b, 41a, 41b joined, for example during molding, plastic welding, etc. Other means of providing a primary seam 50 are also envisaged. For example, the primary seam may be made of different material that the support part 11 and/or the complementary part 12, such as synthetic material, adhesive, glue, etc. Any suitable material or method providing fluid-tightness of the conduit are also envisaged.

Despite all the efforts, the conduit 42 and thus the whole distributor 10 may be prone to leakage. The aging of the material from which the distributor 10 or the primary seam 50 itself is made of may cause internal and/or external leakage. The term internal leakage refers to a scenario in which the fluid from one conduit 42 is leaking to other conduit 42 (not intended to be fluidly connected with the first mentioned one). The term external leakage refers to the scenario in which the fluid from the conduit 42 leaks through the primary seam 50 to the environment. This may cause a severe harm to the environment and may also be dangerous to the end user of the vehicle. Needless to say it may also cause a malfunction or catastrophic failure of such vehicle. Therefore, the means for preventing or limiting the negative aspects of leakage may be provided.

The fluid distributor 10 may further comprise a secondary seam 60. Similarly to the primary seam 50, the secondary seam 60 may be created by joining the parts 11, 12 together. The parts 11, 12 may be joined, for example by molding, plastic welding, etc. Other means of providing the secondary seam 60 are also envisaged. For example, the secondary seam 60 may be made of different material that the support part 11 and/or the complementary part 12, such as synthetic material, adhesive, glue, etc.

The secondary seam 60 may be extending along the primary seam 50. It means that the secondary seam 60 runs substantially in parallel with respect to the primary seam 50. In other words, the secondary seam 60 outlines the primary seam 50 on the first plane P1, wherein the outline of the secondary seam is greater than the outline of the primary seam 50.

The secondary seam 60 may be located, with respect to the primary seam 50, on the opposite side of corresponding tubular conduit 42 and it may be distanced from the primary seam 50 (distance is measured in parallel with respect to the first plane P1).

The distributor 10 may further comprise a first zone 15A. The first zone 15A may be located between the support part 11 and the complementary part 12 In other words, the part 11, 12 together form a first zone 15A located between the primary seam 50 and the secondary seam 60. The first zone 15A is configured to provide a reservoir for the heat transfer fluid in case of leakage of the primary seam 50. The first zone15A allows to trap the first fluid in case of leakage form the conduit 42. Thanks to the secondary seam 60 the first fluid is not getting into the environment, therefore not harming it. The secondary seam 60 may be in fact of the same material and properties as the secondary seam, yet in case of leakage from the primary seam 50, the secondary seam 60 is able to keep the first fluid within the distributor 10, because the secondary seam 60 is shifted away from the central part of the conduit 42 and thus its overall length is greater than one of the primary seam 50.

The primary seam 50 may comprise the same thickness as the secondary seam 60. The thickness of the seam 50, 60 may be measured in a direction parallel to the first plane P1. The thickness of the seam 50, 60 allows controlling robustness of the conduit 42 and also it allows to control flexibility/ elasticity of the entire distributor 10.

Alternatively, the secondary seam 60 may be of greater thickness that the primary seam 50, wherein the thickness is measured in a direction parallel to the first plane P1.

Alternatively, the primary seam 50 may be of greater thickness than the secondary seam 60, wherein the thickness is measured in a direction parallel to the first plane P1.

In order to provide fluid- tightness of the tubular conduit 42, the seam 50, 60 may be formed by joining locally the portion of the support part 11 with the portion of the complementary part 12. This local joint may be carried out, for example, in the process of plastic welding. Accordingly, at least one main channel 19 and the at least one complementary channel 41 together forming at least one hollow tubular conduit 42 may be joined together by plastic welding. In particular, respective edges 19a, 19b, 41a, 41b are aligned so that their respective portions are in contact with each other. Next, the portions of edges 19a, 19b, of the support part 11, preferably ones which are arranged furthermost towards the complementary part 12 are joined by plastic welding with the edges 41a, 41b of the complementary part 12.

Alternatively, or in combination with other main channels 19 joined by plastic welding, at least one main channel 19 and the at least one complementary channel 41 together forming at least one hollow tubular conduit 42 may be joined together by molding. In the molding process the channels 19, 41 are formed by a fixed frame; known as either a mold or a matrix.

In alternative to plastic welding, at least one main channel 19 and the at least one complementary channel 41 together forming at least one hollow tubular conduit 42 may be joined together by adhesive material. Preferably, the adhesive is adapted to withstand high operating temperature of the distributor 10 being in operational mode.

The distributor 10 may further comprise at least one tertiary seam 70. The tertiary seam 70 may extend along the outline of at least primary seam 50. Naturally, when secondary seam 60 is present, the tertiary seam will extend along the outline of both primary seam 50 and secondary seam 60. In other words, the tertiary seam 70 is outermost with respect to all seams 50, 60 present in the embodiment.

The tertiary seam 70 may located proximally to the terminal ends of the support part 11 and the complementary part 12, both extending in parallel in the first plane P1. This allows the tertiary seam to prevent debris, moisture and other residues from penetrating in-between the support part 11 and complementary part 12.

As discussed in previous paragraphs, the distributor 10 may comprise a first zone 15A. The first zone 15A may be located between the support part 11 and the complementary part 12 and it is configured to provide a reservoir for the heat transfer fluid in case of leakage of the primary seam 50.

Accordingly, the distributor 10 may further comprise a second zone 15B, wherein the tertiary seam 70 and secondary seam 60 of said second zone 15B are spaced apart further than he primary seam 50 and secondary seam 60 of the first zone 15A. In other words, the tertiary seam 70 outlines the primary seam 50 and/ or the secondary seam 60 on the first plane P1, wherein the outline of the tertiary seam 70 is greater than the outline of the primary seam 50.

Alternatively, the tertiary seam 70 and the secondary seam 60 of said second zone 15B are spaced apart further than the primary seam 50 and secondary seam 60 of the first zone 15A.

Depending on the desired architecture, the distributor 10 may be adapted for ingress and egress of the fluid therefrom. For example, one of at least one inlet 13 may protrude directly from the support part 11. Similarly, one of the at least one outlet 14 may protrude directly from the support part 11.

Further, one of at least one inlet 13 may protrude directly from the support part 12 Similarly of the at least one outlet 14 may protrude directly from the support part 12.

The term protrudes means that the inlet 13 and outlet 14 spigots may be integrally formed on the distributor 10.

Mixed arrangement of the inlets 13 and outlets 14 on the distributor 10 is also envisaged. The number on inlets 13 and outlets 14 located on the distributor 10 are non-limiting.

Further, the inlet 13, the outlet 14, or both inlet 13 and outlet 14 may be formed on the terminal end of the support plate 11 and complementary plate 12. In this case, at least one inlet 13 and/or one of the at least one outlet 14 may be formed by support part 11 and complementary part 12 altogether. For example, one portion of the inlet 13 outlet 14 spigot may by formed by support part 11 and the other portion of the same inlet or outlet spigot may be formed by complementary part 12. In other words, both support part 11 and complementary part 12 may provide a closed profile of the inlet 13 and/or outlet spigots when said parts 11, 12 are joined together.

Another object of the invention is a motor vehicle comprising at least one heat transfer fluid distributor 10 described in paragraphs above.

## Claims

1. A heat transfer fluid distributor (10) for a cooling circuit of a motor vehicle, the distributor (10) comprising:
- at least one inlet (13) for said heat transfer fluid; and
- at least one outlet (14) for said heat transfer fluid;
- a first part, called the support part (11), comprising at least one channel, called the main channel (19);
- a second part, called the complementary part (12), comprising at least one channel, called the complementary channel (41);
the support part (11) and the complementary part (12) both extending in parallel in the first plane (P1), wherein at least one main channel (19) and the at least one complementary channel (41) together form at least one hollow tubular conduit (42) fluidly connected to one of the at least one inlet (13) and/or to one of the at least one outlet (14), wherein at least one main channel (19) and the at least one complementary channel (41) together forming at least one hollow tubular conduit (42) are joined by a primary seam (50), so that a fluid-tight connection between the main channel (19) and the at least one complementary channel (41) is provided, wherein the fluid distributor (10) further comprises a secondary seam (60) extending along the primary seam (50) wherein the secondary seam (60) is located with respect to the primary seam (50) on the opposite side of corresponding tubular conduit (42).

2. The distributor (10) according to claim 1, wherein the support part (11) and the complementary part (12) together form a first zone (15A) located between the primary seam (50) and the secondary seam (60), wherein the first zone (15A) is configured to provide a reservoir for the heat transfer fluid in case of leakage of the primary seam.

3. The distributor (10) according to any of the preceding claims, wherein the primary seam (50) is of the same thickness as the secondary seam (60), wherein the thickness is measured in a direction parallel to the first plane (P1).

4. The distributor (10) according to any of the preceding claims, wherein secondary seam is of greater thickness that the primary seam, wherein the thickness is measured in a direction parallel to the first plane (P1).

5. The distributor (10) according to any of the preceding claims, wherein primary seam is of greater thickness than the secondary seam, wherein the thickness is measured in a direction parallel to the first plane (P1).

6. The distributor (10) according to any of the preceding claims, wherein at least one main channel (19) and the at least one complementary channel (41) together forming at least one hollow tubular conduit (42) are joined together by plastic welding.

7. The distributor (10) according to any of the preceding claims, wherein at least one main channel (19) and the at least one complementary channel (41) together forming at least one hollow tubular conduit (42) are joined together by molding.

8. The distributor (10) according to any of the preceding claims, wherein at least one main channel (19) and the at least one complementary channel (41) together forming at least one hollow tubular conduit (42) are joined together by adhesive material.

9. The distributor (10) according to any of the preceding claims, wherein the distributor (10) comprises at least one tertiary seam (70) extending along the outline of at least primary seam (50), wherein the tertiary seam (70) is located proximally to the terminal ends of the support part (11) and the complementary part (12), both extending in parallel in the first plane (P1).

10. The distributor (10) according to the preceding claim, wherein the distributor (10) further comprises a second zone (15B), wherein the primary seam (50) and the secondary seam (60) of said second zone (15B) are spaced apart closer than he primary seam (50) and secondary seam (60) of the first zone (15A).

11. The distributor (10) according to any of the preceding claims, wherein one of at least one inlet (13) and/or one of the at least one outlet (14) protrudes directly from the support part (11).

12. The distributor (10) according to any of the preceding claims, wherein one of at least one inlet (13) and/or one of the at least one outlet (14) protrudes directly from the complementary part (12).

13. The distributor (10) according to any of the preceding claims, wherein one of at least one inlet (13) and/or one of the at least one outlet (14) is formed by support part (11) and complementary part (12).

14. A motor vehicle comprising at least one heat transfer fluid distributor (10) according to any of the preceding claims.
